# EUROPÄISCHE PATENTSCHRIFT

(11) **EP 3 515 626 B1**
(45) Veröffentlichungstag und Bekanntmachung des Hinweises auf die Patenterteilung: **04.11.2020**
(21) Anmeldenummer: 17777855.2
(22) Anmeldetag: 26.09.2017
(51) Int. Cl.: B21D 35/00, B21D 19/08

(54) **WERKZEUGMASCHINE UND VERFAHREN ZUM BEARBEITEN VON PLATTENFÖRMIGEN WERKSTÜCKEN**
MACHINE TOOL AND METHOD FOR MACHINING PLANAR WORKPIECES
MACHINE-OUTIL ET PROCÉDÉ D'USINAGE DE PIÈCES EN FORME DE PLAQUE

(30) Priorität: 26.09.2016 DE 102016118175
(43) Veröffentlichungstag der Anmeldung: 31.07.2019
(73) Patentinhaber: Trumpf Werkzeugmaschinen GmbH + Co. KG, 71254 Ditzingen (DE)
(72) Erfinder: WILHELM, Markus, 70839 Gerlingen (DE); HANK, Rainer, 71735 Eberdingen (DE); KLINKHAMMER, Marc, 71254 Ditzingen (DE); SCHINDEWOLF, Leonard, 71277 Rutesheim (DE); OCKENFUSS, Simon, 71034 Böblingen (DE); KAPPES, Jens, 70771 Leinfelden-Echterdingen (DE); TRÄNKLEIN, Dennis, 71154 Nufringen (DE); TATARCZYK, Alexander, 71229 Höfingen (DE); NEUPERT, Jörg, 70499 Stuttgart (DE); BITTO, Dominik, 70825 Münchingen (DE); MAATZ, Markus, 70771 Leinfelden-Echterdingen (DE); JAKISCH, Christian, 95488 Eckersdorf (DE)
(74) Vertreter: Mammel und Maser
(86) Internationale Anmeldenummer: PCT/EP2017/074281
(87) Internationale Veröffentlichungsnummer: WO 2018/055177

(56) Entgegenhaltungen:
- EP-B1- 2 527 058
- DE-A1-102011 088 673
- US-A1- 2015 306 653

## Beschreibung

**Werkzeugmaschine und Verfahren zum Bearbeiten von plattenförmigen Werkstücken**

Die Erfindung betrifft eine Werkzeugmaschine und ein Verfahren zum Bearbeiten von plattenförmigen Werkstücken, vorzugsweise von Blechen.

Aus der EP 3 106 241 A1 (gilt als Stand der Technik unter Artikel 54 (3) EPÜ) ist eine Werkzeugmaschine zum Bearbeiten von plattenförmigen Werkstücken bekannt. Diese Werkzeugmaschine umfasst ein Oberwerkzeug, welches entlang einer Hubachse mit einer oberen Hubantriebsvorrichtung in Richtung auf ein mit dem Oberwerkzeug zu bearbeitenden Werkstück und in Gegenrichtung bewegbar ist und welches mit einer motorischen Antriebsanordnung entlang einer senkrecht zur Hubachse verlaufenden oberen Positionierachse verfahrbar ist. Dem Oberwerkzeug ist ein Unterwerkzeug zugeordnet, welches entlang einer unteren Positionierachse mit einem motorischen Antrieb verfahrbar ist. Das Oberwerkzeug und Unterwerkzeug sind jeweils unabhängig voneinander entlang deren Positionierachsen in einem Rahmeninnenraum eines Maschinenrahmens verfahrbar. Diesem Maschinenrahmen zugeordnet sind zwei Werkstückauflagen zur Aufnahme des Werkstücks, um dieses zwischen dem Oberwerk-zeug und dem Unterwerkzeug für die Bearbeitung zu positionieren.

Eine weitere Werkzeugmaschine ist aus der EP 2 527 058 B1 bekannt. Diese Druckschrift offenbart eine Werkzeugmaschine in Form einer Presse zum Bearbeiten von Werkstücken, wobei ein Oberwerkzeug an einer Hubvorrichtung vorgesehen ist, welche gegenüber eines zu bearbeitenden Werkstücks entlang einer Hubachse in Richtung auf das Werkstück und in der Gegenrichtung verfahrbar ist. In der Hubachse und dem Oberwerkzeug gegenüberliegend ist ein Unterwerkzeug vorgesehen, welches zu einer Unterseite positioniert ist. Eine Hubantriebsvorrichtung für eine Hubbewegung des Oberwerkzeuges wird durch ein Keilgetriebe angesteuert. Die Hubantriebsvorrichtung mit dem daran angeordneten Oberwerkzeug ist längs einer Positionierachse verfahrbar. Das Unterwerkzeug wird dabei synchron zum Oberwerkzeug verfahren.

Der Erfindung liegt die Aufgabe zugrunde, eine Werkzeugmaschine und ein Verfahren vorzuschlagen, durch welche die Flexibilität in der Bearbeitung von Werkstücken erhöht ist.

Diese Aufgabe wird durch eine Werkstückmaschine zum Bearbeiten, insbesondere zum Schneiden und/oder Umformen, von plattenförmigen Werkstücken, vorzugsweise von Blechen, gelöst, bei welcher das Oberwerkzeug mit einer Verfahrbewegung entlang der oberen Positionierachse und einer Bewegung entlang der Hubachse der oberen Hubantriebsvorrichtung überlagert ansteuerbar ist. Zudem kann durch die überlagerte Verfahrbewegung entlang der oberen Positionierachse und entlang der oberen Hubachse eine Prozesszeitverkürzung erzielt werden. Dadurch kann auch eine ungekoppelte Bewegung von dem Oberwerkzeug und dem Unterwerkzeug bzw. dem Oberwerkzeug zum Unterwerkzeug und umgekehrt ermöglicht sein. Dies eröffnet eine Vielzahl von Bearbeitungsmöglichkeiten für die Bearbeitung von Werkstücken beim Schneiden, Stanzen, Umformen und/oder einer Kombination hiervon, als auch beim Beschriften, Gravieren oder dergleichen. Darüber hinaus ist beispielsweise bei der Ausbildung des Oberwerkzeuges als Stanzwerkzeug eine definierte Positionierung eines Werkzeugkörpers mit zumindest einer Schneidkante beziehungsweise eines Stanzstempels zur Hubachse und korrespondierend hierzu bei der Ausbildung des Unterwerkzeugs als Stanzmatrize mit zumindest einer Gegenschneidkante zur Hubachse nicht erforderlich, da der Stanzstempel und die Stanzmatrize aufgrund der unabhängigen Verfahrbarkeit des Oberwerkzeuges und/oder des Unterwerkzeuges in ihrer Position zueinander mittels der Steuerung anordenbar sind.

Bevorzugt ist vorgesehen, dass die Verfahrbewegung des Oberwerkzeuges und des Unterwerkzeuges zeitgleich und in der Verfahrrichtung und/oder in der Verfahrgeschwindigkeit unabhängig mit jeweils einer motorischen Antriebsanordnung ansteuerbar sind. Somit kann die Verfahrbewegung des Oberwerkzeuges und des Unterwerkzeuges zwar gleichzeitig angesteuert werden, jedoch ist eine synchrone Verfahrbewegung nicht erforderlich. Vielmehr kann die Verfahrbewegung des Oberwerkzeuges abweichend zu dem des Unterwerkzeuges erfolgen.

Eine weitere vorteilhafte Ausgestaltung der Werkzeugmaschine sieht vor, dass das Unterwerkzeug durch eine Hubantriebsvorrichtung entlang der Hubachse in Richtung auf das Werkstück zu und in Gegenrichtung bewegbar ist. Vorzugsweise ist vorgesehen, dass eine Verfahrbewegung entlang der unteren Positionierachse des Unterwerkzeugs mit einer Hubbewegung entlang der unteren Hubantriebsvorrichtung überlagert ansteuerbar ist. Somit kann sowohl das Oberwerkzeug als auch das Unterwerkzeug jeweils und unabhängig voneinander mit einer Hubantriebsvorrichtung entlang der Hubachse verfahrbar angesteuert werden. Dadurch wird eine weitere Erhöhung in der Flexibilität der Bearbeitung erzielt.

Des Weiteren ist bevorzugt vorgesehen, dass die obere Hubantriebsvorrichtung und die untere Hubantriebsvorrichtung jeweils unabhängig voneinander mit der Steuerung der Werkzeugmaschine ansteuerbar sind. Diese Hubbewegung kann mit der Verfahrbewegung überlagert werden und jeweils für das Oberwerkzeug als auch Unterwerkzeug ausgewählt und angesteuert werden. Dadurch wird die Flexibilität in der Bearbeitung von Werkstücken als auch in der Bearbeitungsrichtung erhöht. Beispielsweise kann abweichend zu einer Bearbeitungsrichtung senkrecht zur Werkstückebene bzw. entlang der Hubachse in Z-Richtung eine Hubbewegung des Oberwerkzeuges und/oder des Unterwerkzeuges ermöglicht sein, bei welchem eine Überlagerung einer Verfahrbewegung entlang einer Positionierachse in Y-Richtung und entlang der Hubachse in Z-Richtung erfolgt. Somit können auch bezogen auf die Z-Achse schräge Schnitte in das Werkstück eingebracht werden.

Des Weiteren ist bevorzugt vorgesehen, dass benachbart zum Maschinenrahmen zumindest eine an den Rahmeninnenraum des Maschinenrahmens angrenzende Werkstückauflage vorgesehen ist, auf welche in einer Auflageebene das plattenförmige Werkstück positionierbar ist. Diese Werkstückauflage ist beispielsweise einer Beladeeinheit und/oder Entladeeinheit zugeordnet. Dadurch kann ein einfaches Bestücken der Werkzeugmaschine mit plattenförmigen Werkstücken erfolgen. Mittels einer Vorschubeinrichtung und einer daran angeordneten Spannvorrichtung oder Greifern kann das Werkstück relativ zum Rahmeninnenraum verfahren werden, um es in der gewünschten Bearbeitungsposition zwischen dem Ober- und Unterwerkzeug zuzuordnen. Bevorzugt ist beidseitig zum Maschinenrahmen eine Werkstückauflage vorgesehen, so dass auf einer Seite des Maschinenrahmens ein unbearbeitetes Werkstück positioniert werden und dieses Werkstück mittels der Vorschubvorrichtung durch den offenen, insbesondere C-förmigen, Maschinenrahmen oder geschlossenen Maschinenrahmen hindurchgeführt werden kann. Große Teile oder ein Restgitter können über die weitere Werkstückauflagefläche aus dem Maschinenrahmen heraus transportiert und entladen werden. Sofern ein oder mehrere Werkstückteile durch den Maschinenrahmen nach unten ausgeschleust werden, kann auch die weitere Werkstückauflage wiederum zum Bestücken mit einem neuen Werkstück verwendet werden, wodurch die Produktivität erhöht werden kann.

Des Weiteren ist bevorzugt vorgesehen, dass benachbart zur Werkstückauflage und den Rahmeninnenraum durchquerend die Vorschubeinrichtung vorgesehen ist, durch welche das Werkstück relativ zum Ober- und Unterwerkzeug verschiebbar ist. Dadurch kann beispielsweise das Werkstück in und entgegen der X-Richtung verfahren werden, wohingegen das Ober- und/oder Unterwerkzeug in und entgegen der Y-Richtung im Maschinenrahmen verfahrbar sind. Somit kann innerhalb eines Bearbeitungsraumes im Rahmeninnenraum jede gewünschte Position für die Bearbeitung des Werkstücks eingenommen werden, wodurch eine vollflächige Bearbeitung des Werkstücks ermöglicht ist.

Des Weiteren ist bevorzugt vorgesehen, dass das Unterwerkzeug in eine gegenüber einer Auflageebene der Werkstückauflage abgesenkten Position absenkbar und von zumindest einer Werkstückauflage überfahrbar ist und vorzugsweise im Rahmeninnenraum eine durch die Werkstückauflage geschlossene oder verschließbare Auflageebene gebildet ist. Dies ermöglicht, dass nach dem Bearbeiten des Werkstückes ein sicherer Transport des Werkstückes mit darin teils freigeschnittenen Werkstückteilen oder mittels einer Restverbindung am Restgitter anhaftenden Werkstückteilen zu einem nachfolgenden Bearbeitungsvorgang oder einen Ausschleusvorgang erfolgen kann. Zwischen den Werkstückauflagen im Bereich des absenkbaren Unterwerkzeuges kann eine Teileklappe integriert sein, welche nach unten öffenbar ist, um auch Teile in den Maschinenraum nach unten auszuschleusen. Durch das Absenken des Unterwerkzeuges kann auch vermieden werden, dass sich an einer Unterseite des Werkstücks beim Überfahren des Unterwerkzeugs Beschädigungen, insbesondere Kratzer, bilden.

Des Weiteren ist bevorzugt vorgesehen, dass die obere und untere Hubantriebsvorrichtung baugleich sind. Dadurch kann eine Kostenreduzierung beim Herstellen der Werkzeugmaschinen ermöglicht sein. Bevorzugt sind auch die Antriebsanordnungen für die Ansteuerung der Verfahrbewegung der oberen und unteren Hubantriebsvorrichtung baugleich ausgebildet.

Der Maschinenrahmen für die Werkzeugmaschine kann als C-Rahmen oder als geschlossener Rahmen ausgebildet sein. In Abhängigkeit der Größe der Maschine als auch der Bearbeitungskräfte kann ein entsprechender Maschinenrahmen ausgebildet werden.

Eine weitere vorteilhafte Ausgestaltung der Werkzeugmaschine sieht vor, dass dem Maschinenrahmen zumindest eine weitere Werkstückbearbeitungsvorrichtung zugeordnet oder eine weitere Werkstückbearbeitungsvorrichtung an dem Maschinenrahmen angeordnet ist, welche in X-, Y- und/oder Z-Richtung verfahrbar ist. Dadurch können in der Werkzeugmaschine zwei in der Art voneinander abweichende Bearbeitungen an demselben Werkstück, vorzugsweise mittels einer Greifposition durch Greifer, durchgeführt werden.

Die weitere Werkzeugbearbeitungsvorrichtung ist bevorzugt parallel zum Ober- und Unterwerkzeug, insbesondere entlang eines oberen horizontalen Rahmenschenkels des Maschinenrahmens, verfahrbar. Dadurch kann der Aufbau der Werkzeugmaschine mittels dem Ober- und Unterwerkzeug, sowie der zumindest einen dem Maschinenrahmen zugeordneten Werkstückauflage beibehalten werden und eine zusätzliche Bearbeitung der Werkstücke integriert sein.

Diese weitere Werkstückbearbeitungsvorrichtung ist bevorzugt unabhängig vom Ober- und/oder Unterwerkzeug verfahrbar angesteuert.

Bevorzugt ist die Werkstückbearbeitungsvorrichtung als eine Laserbearbeitungsvorrichtung ausgebildet, bei welcher insbesondere zumindest ein Laserbearbeitungskopf entlang dem Maschinenrahmen verfahrbar ist. Dadurch kann in der Werkzeugmaschine beispielsweise sowohl eine Laserbearbeitung wie Schneiden, Schweißen oder Beschriften als auch eine Stanzbearbeitung und/oder ein Umformen und/oder Beschriften des Werkstückes erfolgen. Beispielsweise kann eine Stanzbearbeitung oder ein Umformen des Werkstückes durchgeführt werden und nachfolgend, bevor das Werkstückteil aus dem Werkstück abgetrennt wird, eine Beschriftung oder Kennzeichnung mittels dem Laser erfolgen. Eine solche Kennzeichnung kann bei dem Werkstückteil verbleiben, so dass die Produktionszeit und/oder der Produktionsort zu einem späteren Zeitpunkt nachvollziehbar ist.

Vorteilhafterweise ist der zumindest eine Laserbearbeitungskopf durch einen zumindest einachsig ausgebildeten Linearantrieb verfahrbar an dem Maschinenrahmen angeordnet. Dadurch kann eine exakte Führung und Ansteuerung einer Bearbeitungsposition des Laserbearbeitungskopfes zum Werkstück ermöglicht sein.

Des Weiteren ist bevorzugt vorgesehen, dass die Antriebsanordnung des Oberwerkzeuges und/oder des Unterwerkzeuges und/oder die Laserbearbeitungsvorrichtung durch eine Steuerung, vorzugsweise eine gemeinsame Steuerung, jeweils unabhängig voneinander ansteuerbar sind.

Die der Erfindung zugrundeliegende Aufgabe wird des Weiteren durch ein Verfahren zum Bearbeiten von plattenförmigen Werkstücken, insbesondere von Blechen, mit einer Werkzeugmaschine gelöst, bei dem ein Oberwerkzeug, welches entlang einer Oberachse mit einer Hubantriebsvorrichtung in Richtung in ein mit dem Oberwerkzeug zu bearbeitenden Werkstück und in Gegenrichtung bewegbar ist, mit mindestens einer motorischen Antriebsanordnung entlang einer senkrecht zur Hubachse verlaufenden oberen Positionierachse positioniert wird und bei dem ein Unterwerkzeug, welches zum Oberwerkzeug ausgerichtet ist, mit mindestens einer motorischen Antriebsanordnung entlang einer unteren Positionierachse positioniert wird, die senkrecht zur Hubachse des Oberwerkzeugs ausgerichtet ist und bei dem das Ober- und Unterwerkzeug im Rahmeninnenraum eines Maschinenrahmens verfahren werden, bei dem mit einer Steuerung die motorische Antriebsanordnungen zum Verfahren des Ober- und Unterwerkzeugs angesteuert werden, bei dem ein Werkstück zwischen dem Ober- und Unterwerkzeug positioniert wird und die Verfahrbewegung des Oberwerkzeugs entlang der oberen Positionierachse und die Verfahrbewegung des Unterwerkzeugs entlang der unteren Positionierachse jeweils unabhängig voneinander angesteuert wird, wobei das Oberwerkzeug mit einer Verfahrbewegung entlang deren oberen Positionierachse und einer Hubbewegung entlang der Hubachse der oberen Hubantriebsanordnung überlagert angesteuert wird Dies ermöglicht eine höhere Flexibilität im Einsatz der Werkzeuge. Das Ober-und Unterwerkzeug kann bezüglich der Anordnung beispielsweise einer Schneidkante am Oberwerkzeug und einer Gegenschneidkante am Unterwerkzeug frei gewählt werden. Eine Anpassung im Abstand auf deren jeweiligen Positionierachse ist nicht erforderlich, da durch die unabhängige Verfahrbewegung des Oberwerkzeuges und Unterwerkzeuges entlang der jeweiligen Positionierachse eine frei wählbare Positionierung von beispielsweise einer Schneidkante zur Gegenschneidkante ermöglicht ist. Dadurch lassen sich in einfacher Weise auch verschiedentliche Abstände von der Schneidkante zur Gegenschneidkante einstellen, um beispielsweise eine Schnittspaltbreite einzustellen. Diese Flexibilität in der Bearbeitung kann nicht nur für die schneidende oder stanzende Bearbeitung, sondern auch für das Umformen, Biegen, Beschriften, Gravieren oder weiteren Möglichkeiten zur Werkstückbearbeitung gelten.

Bevorzugt ist vorgesehen, dass das Oberwerkzeug und/oder das Unterwerkzeug mit einer Verfahrbewegung entlang der Positionierachse und einer Hubbewegung entlang der Hubachse überlagert angesteuert werden. Dies ermöglicht eine Hubbewegung des Oberwerkzeugs relativ zum Unterwerkzeug entlang einer Bahn, die außerhalb einer Hubachse liegt, welche beispielsweise in Z-Richtung ausgerichtet ist. Die Überlagerung der Verfahrbewegung und der Hubbewegung kann beliebig angesteuert werden.

Bevorzugt können sowohl schräg verlaufende Hubbewegungen als auch bogen- oder kurvenförmige Hubverläufe angesteuert werden. Der Bahnverlauf der Hubbewegung kann anwendungsspezifisch ausgewählt werden. Beispielsweise können auch mehrere aufeinanderfolgende lineare Hubbewegungen angesteuert werden, die in der Richtung voneinander abweichen. Auch kann eine Kombination von einem oder mehreren linearen Hubbewegungen und einem oder mehreren kurvenförmigen Hubbewegungen miteinander kombiniert werden.

Des Weiteren kann vorgesehen sein, dass beispielsweise das Oberwerkzeug mit einer Überlagerung der Verfahrbewegung in Y-Richtung und einer Hubbewegung in Z-Richtung angesteuert wird, wohingegen das Unterwerkzeug ruhend oder stillstehend positioniert wird. Diese Ansteuerung vom Ober- und Unterwerkzeug kann auch vertauscht sein. Auch kann vorgesehen sein, dass beispielsweise das Oberwerkzeug mit einer überlagerten Verfahrbewegung und Hubbewegung angesteuert wird, wohingegen das Unterwerkzeug nur mit einer Hubbewegung oder nur mit einer Verfahrbewegung entlang der Positionierachse angesteuert wird. Gleiches gilt auch für eine vertauschte Anordnung des Oberwerkzeugs zum Unterwerkzeug.

Eine weitere vorteilhafte Ausgestaltung des Verfahrens sieht vor, dass eine Bearbeitung eines Werkstücks, insbesondere einer Werkstückkante, mit einem Oberwerkzeug durchgeführt wird, welches einen Werkzeugkörper aufweist, dessen Längsachse parallel oder in einer Positionierachse des Oberwerkzeugs liegt und zumindest eine Schneidkante umfasst, die vorzugsweise rechtwinklig zur Positionierachse ausgerichtet ist. Ein solches Oberwerkzeug kann durch eine überlagerte Verfahrbewegung entlang der Positionierachse und einer Hubbewegung entlang der Hubachse angesteuert werden, so dass beispielsweise das Oberwerkzeug mit einer Hubbewegung eines Arbeitshubes mit einer gegenüber der Hubachse geneigten oder schrägen Hubrichtung beaufschlagt wird, um beispielsweise eine Teilekante am Werkstück abzutragen. Bei einer linearen Hubbewegung, die geneigt oder schräg zur Hubachse ausgerichtet ist, kann beispielsweise eine Fase hergestellt werden. In Abhängigkeit der Neigung der linearen Hubbewegung zur Hubachse kann der Winkel der Fase beeinflusst sein. Des Weiteren kann dadurch beeinflusst werden, ob sich die Fase lediglich über einen geringen Teil der Dicke oder über die halbe Dicke des Werkstücks oder sogar vollständig entlang der Stirnseite des Werkstücks erstreckt. Bei einer Überlagerung der Verfahrbewegung des Oberwerkzeuges entlang der oberen Positionierachse und einer Hubbewegung entlang der Hubachse zur Erzielung einer kurvenförmigen Hubbewegung oder bogenförmigen Hubbewegung können auch gerundete Teilekanten am Werkstück hergestellt werden.

Bevorzugt ist vorgesehen, dass das Oberwerkzeug und/oder das Unterwerkzeug durch die Hubantriebsvorrichtung zueinander ausgerichtet werden, in dem das Oberwerkzeug und/oder Unterwerkzeug um die Hubachse, beziehungsweise um die jeweilige Positionierachse des Oberwerkzeugs und/oder Unterwerkzeugs, gedreht werden. Diese Ansteuerung der Drehbewegung des Oberwerkzeuges und/oder Unterwerkzeuges der oberen und unteren Hubantriebsvorrichtung kann wiederum jeweils unabhängig voneinander erfolgen.

Bei der Bearbeitung von plattenförmigen Werkstücken in einer Werkzeugmaschine der vorgenannten Art ist bevorzugt vorgesehen, dass das Werkstück während eines Arbeitshubes des Oberwerkzeuges und/oder des Unterwerkzeuges ruhend oder stillstehend gehalten wird.

Die Erfindung sowie weitere vorteilhafte Ausführungsformen und Weiterbildungen derselben werden im Folgenden anhand der in den Zeichnungen dargestellten Beispiele näher beschrieben und erläutert. Es zeigen:
Figur 1 eine perspektivische Ansicht der erfindungsgemäßen Werkzeugmaschine,
Figur 2 eine schematisierte Darstellung des grundsätzlichen Aufbaus einer Hubantriebsvorrichtung und eines motorischen Antriebes gemäß Figur 1,
Figur 3 ein schematisches Diagramm einer überlagerten Hubbewegung in Y- und Z-Richtung des Stößels gemäß Figur 1,
Figur 4 ein schematisches Diagramm einer weiteren überlagerten Hubbewegung in Y- und Z-Richtung des Stößels gemäß Figur 1,
Figur 5 eine schematische Ansicht von oben auf die Werkzeugmaschine gemäß Figur 1 mit Werkstückauflageflächen,
Figur 6 eine schematische Schnittansicht der Werkzeugmaschine entlang der Linie VI-VI in Figur 1 der dem Maschinengrundgestell zugeordneten Werkstückauflagefläche,
Figur 7 eine perspektivische Ansicht einer ersten Ausführungsform eines Werkzeugs für die Werkzeugmaschine gemäß Figur 1,
Figur 8 eine schematische Schnittansicht des Werkzeugs gemäß Figur 7,
Figuren 9a - 9d schematisch vereinfachte Ansichten des Werkzeuges gemäß Figur 7 zur Herstellung von Werkstückkanten am zu bearbeitenden Werkstück,
Figur 10 eine perspektivische Ansicht einer alternativen Ausführungsform des Werkzeugs zu Figur 7,
Figur 11 eine schematische Schnittansicht des Werkzeugs gemäß Figur 10 und
Figuren 12a - 12f schematisch vereinfachte Ansichten eines Werkzeuges gemäß Figur 10 zur Bearbeitung von Werkstückkanten am Werkstück.

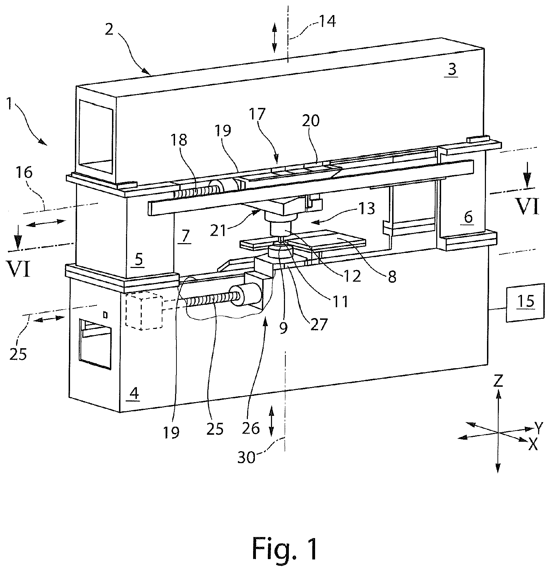

In Figur 1 ist eine Werkzeugmaschine 1 dargestellt, welche als Stanzpresse ausgebildet ist. Diese Werkzeugmaschine 1 umfasst eine Tragstruktur mit einem geschlossenen Maschinenrahmen 2. Dieser umfasst zwei horizontale Rahmenschenkel 3, 4 sowie zwei vertikale Rahmenschenkel 5 und 6. Der Maschinenrahmen 2 umschließt einen Rahmeninnenraum 7, der den Arbeitsbereich der Werkzeugmaschine 1 mit einem Oberwerkzeug 11 und einem Unterwerkzeug 9 bildet.

Die Werkzeugmaschine 1 dient zur Bearbeitung von plattenförmigen Werkstücken 10, welche der Einfachheit halber in Figur 1 nicht dargestellt sind und können zu Bearbeitungszwecken im Rahmeninnenraum 7 angeordnet werden. Ein zu bearbeitendes Werkstück 10 wird auf eine im Rahmeninnenraum 7 vorgesehene Werkstückabstützung 8 abgelegt. In einer Aussparung der Werkstückabstützung 8 ist am unteren horizontalen Rahmenschenkel 4 des Maschinenrahmens 2 das Unterwerkzeug 9 beispielsweise in Form einer Stanzmatrize gelagert. Diese Stanzmatrize kann mit einer Matrizenöffnung versehen sein. Bei einer Stanzbearbeitung taucht in die Matrizenöffnung des als Stanzmatrize ausgebildeten Unterwerkzeuges das als Stanzstempel ausgebildete Oberwerkzeug 11 ein.

Das Oberwerkzeug 11 und Unterwerkzeug 9 kann anstelle von einem Stanzstempel und einer Stanzmatrize auch als ein Biegestempel sowie eine Biegematrize zum Umformen von Werkstücken 10 eingesetzt werden.

Das Oberwerkzeug 11 ist in einer Werkzeugaufnahme an einem unteren Ende eines Stößels 12 fixiert. Der Stößel 12 ist Teil einer Hubantriebsvorrichtung 13, mittels derer das Oberwerkzeug 11 in eine Hubrichtung entlang einer Hubachse 14 bewegt werden kann. Die Hubachse 14 verläuft in Richtung der Z-Achse des Koordinatensystems einer in Figur 1 angedeuteten numerischen Steuerung 15 der Werkzeugmaschine 1. Senkrecht zur Hubachse 14 kann die Hubantriebsvorrichtung 13 längs einer Positionierachse 16 in Richtung des Doppelpfeils bewegt werden. Die Positionierachse 16 verläuft in Richtung der Y-Richtung des Koordinatensystems der numerischen Steuerung 15. Die das Oberwerkzeug 11 aufnehmende Hubantriebsvorrichtung 13 wird mittels eines motorischen Antriebs 17 längs der Positionierachse 16 verfahren.

Die Bewegung des Stößels 12 entlang der Hubachse 14 und die Positionierung der Hubantriebsvorrichtung 13 entlang der Positionierachse 16 erfolgen mittels eines motorischen Antriebes 17 in Form einer Antriebsanordnung 17, insbesondere Spindelantriebsanordnung, mit einer in Richtung der Positionierachse 16 verlaufenden und mit dem Maschinenrahmen 2 fest verbundenen Antriebsspindel 18 ausgebildet sein kann. Geführt wird die Hubantriebsvorrichtung 13 bei Bewegungen längs der Positionierachse 16 an zwei drei Führungsschienen 19 des oberen Rahmenschenkels 3, von denen in Figur 1 Führungsschienen 19 zu erkennen sind. Die eine übrige Führungsschiene 19 verläuft parallel zur sichtbaren Führungsschiene 19 und ist von dieser in Richtung X-Achse des Koordinatensystems der numerischen Steuerung 15 beabstandet. Auf den Führungsschienen 19 laufen Führungsschuhe 20 der Hubantriebsvorrichtung 13. Der gegenseitige Eingriff der Führungsschiene 19 und der Führungsschuhe 20 ist dergestalt, dass diese Verbindung zwischen den Führungsschienen 19 und den Führungsschuhen 20 auch eine in vertikaler Richtung wirkende Last aufnehmen kann. Dementsprechend ist die Hubvorrichtung 13 über die Führungsschuhe 20 und die Führungsschienen 19 am Maschinenrahmen 2 aufgehängt. Ein weiterer Bestandteil der Hubantriebsvorrichtung 13 ist ein Keilgetriebe 21, durch welches eine Lage des Oberwerkzeuges 11 relativ zum Unterwerkzeug 9 einstellbar ist.

Das Unterwerkzeug 9 ist entlang einer unteren Positionierachse 25 verfahrbar aufgenommen. Diese untere Positionierachse 25 verläuft in Richtung der Y-Achse des Koordinatensystems der numerischen Steuerung 15. Vorzugsweise ist die untere Positionierachse 25 parallel zur oberen Positionierachse 16 ausgerichtet. Das Unterwerkzeug 9 kann unmittelbar an der unteren Positionierachse 16 mit einer motorischen Antriebsanordnung 26 entlang der Positionierachse 25 verfahren werden. Alternativ oder ergänzend kann das Unterwerkzeug 9 auch an einer Hubantriebsvorrichtung 27 vorgesehen sein, welche entlang der unteren Positionierachse 25 mittels der motorischen Antriebsanordnung 26 verfahrbar ist. Diese Antriebsanordnung 26 ist bevorzugt als Spindelantriebsanordnung ausgebildet. Die untere Hubantriebsvorrichtung 27 kann im Aufbau der oberen Hubantriebsvorrichtung 13 entsprechen. Ebenfalls kann die motorische Antriebsanordnung 26 der motorischen Antriebsanordnung 17 entsprechen.

Die untere Hubantriebsvorrichtung 27 ist ebenfalls an einem unteren horizontalen Rahmenschenkel 4 zugeordneten Führungsschienen 19 verschiebbar gelagert. Auf den Führungsschienen 19 laufen Führungsschuhe 20 der Hubantriebsvorrichtung 27, so dass die Verbindung zwischen den Führungsschienen 19 und Führungsschuhen 20 am Unterwerkzeug 9 auch eine in vertikaler Richtung wirkende Last aufnehmen kann. Dementsprechend ist auch die Hubantriebsvorrichtung 27 über die Führungsschuhe 20 und die Führungsschienen 19 am Maschinenrahmen 2 und beabstandet zu den Führungsschienen 19 und Führungsschuhen 20 der oberen Hubantriebsvorrichtung 13 aufgehängt. Auch die Hubantriebsvorrichtung 27 kann ein Keilgetriebe 21 umfassen, durch welches die Lage beziehungsweise Höhe des Unterwerkzeuges 9 entlang der Z-Achse einstellbar ist.

Durch die numerische Steuerung 15 können sowohl die motorischen Antriebe 17 für eine Verfahrbewegung des Oberwerkzeuges 11 entlang der oberen Positionierachse 16 als auch der oder die motorischen Antriebe 26 für eine Verfahrbewegung des Unterwerkzeuges 9 entlang der unteren Positionierachse 25 unabhängig voneinander angesteuert werden. Somit ist das Ober-und Unterwerkzeug 11, 9 synchron in Richtung der Y-Achse des Koordinatensystems verfahrbar. Ebenso kann eine unabhängige Verfahrbewegung des Ober- und Unterwerkzeuges 11, 9 auch in verschiedene Richtungen angesteuert werden. Diese unabhängige Verfahrbewegung des Ober- und Unterwerkzeuges 11, 9 kann zeitgleich angesteuert werden. Durch die Entkopplung der Verfahrbewegung zwischen dem Oberwerkzeug 11 und dem Unterwerkzeug 9 kann eine erhöhte Flexibilität in der Bearbeitung von Werkstücken 10 erzielt werden. Auch kann das Ober- und Unterwerkzeug zur Bearbeitung der Werkstücke 10 in vielfältiger Weise ausgebildet sein.

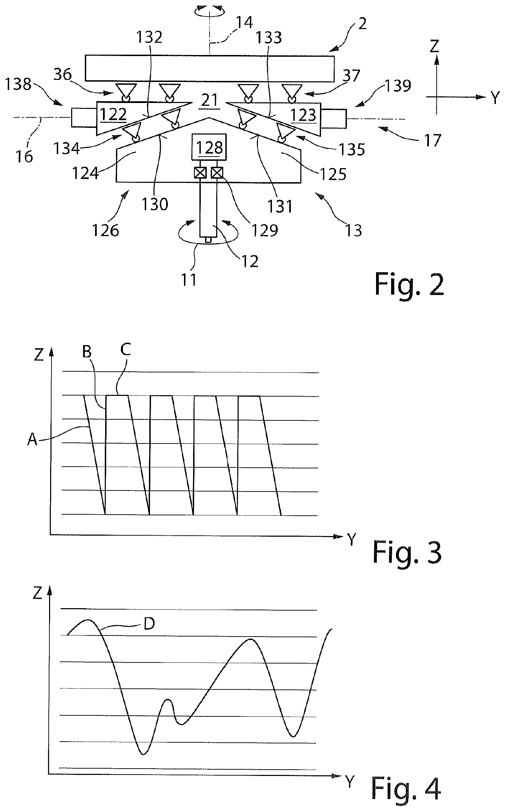

Ein Bestandteil der Hubantriebsvorrichtung 13 ist das Keilgetriebe 21, welches in Figur 2 dargestellt ist. Das Keilgetriebe 21 umfasst zwei antriebsseitige Keilgetriebeelemente 122, 123, sowie zwei abtriebsseitige Keilgetriebeelemente 124, 125. Letztere sind konstruktiv zu einer Baueinheit in Form eines abtriebsseitigen Doppelkeils 126 zusammengefasst. An dem abtriebsseitigen Doppelkeil 126 ist der Stößel 12 um die Hubachse 14 drehbar gelagert. Eine motorische Drehantriebsvorrichtung 128 ist in dem abtriebsseitigen Doppelkeil 126 untergebracht und stellt den Stößel 12 bei Bedarf um die Hubachse 14 zu. Dabei ist sowohl eine Links- als auch eine Rechtsdrehung des Stößels 12 gemäß dem Doppelpfeil in Figur 2 möglich. Eine Stößellagerung 129 ist schematisch dargestellt. Zum einen erlaubt die Stößellagerung 129 reibungsarme Drehbewegungen des Stößels 12 um die Hubachse 14, zum anderen lagert die Stößellagerung 129 den Stößel 12 in axialer Richtung und trägt dementsprechend Lasten, die auf den Stößel 12 in Richtung der Hubachse 14 wirken in den abtriebsseitigen Doppelkeil 126 ab.

Der abtriebsseitige Doppelkeil 126 wird durch eine Keilfläche 130, sowie durch eine Keilfläche 131 des abtriebsseitigen Getriebeelementes 125 begrenzt. Den Keilflächen 130, 131 der abtriebsseitigen Keilgetriebeelemente 124, 125 liegen Keilflächen 132, 133 der antriebsseitigen Keilgetriebeelemente 122, 123 gegenüber. Durch Längsführungen 134, 135 sind das antriebsseitige Keilgetriebeelement 122 und das abtriebsseitige Keilgetriebeelement 124, sowie das antriebsseitige Keilgetriebeelement 123 und das abtriebsseitige Keilgetriebeelement 125 in Richtung der Y-Achse, das heißt, in Richtung der Positionierachse 16 der Hubantriebsvorrichtung 13 relativ zueinander bewegbar geführt.

Das antriebsseitige Keilgetriebeelement 122 verfügt über eine motorische Antriebseinheit 138, das antriebsseitige Keilgetriebeelement 123 über eine motorische Antriebseinheit 139. Beide Antriebseinheiten 138, 139 gemeinsam bilden die Spindelantriebsanordnung 17.

Den motorischen Antriebseinheiten 138, 139 gemeinsam ist die in Figur 1 gezeigte Antriebsspindel 18 als an dem Maschinenrahmen 2 gelagerte und folglich tragstrukturseitige Antriebsvorrichtung.

Zu den motorischen Antriebseinheiten 138, 139 werden die antriebsseitigen Keilgetriebeelemente 122, 123 derart betrieben, dass diese sich entlang der Positionierachse 16 beispielsweise aufeinander zu bewegen, wodurch sich eine Relativbewegung zwischen den antriebsseitigen Keilgetriebeelementen 122, 123 einerseits und den abtriebsseitigen Keilgetriebeelementen 124, 125 anderseits ergibt. Infolge dieser Relativbewegung wird der abtriebsseitige Doppelkeil 126 und der daran gelagerte Stößel 12 entlang der Hubachse 14 nach unten bewegt. Der an dem Stößel 12 beispielsweise montierte Stanzstempel 11 führt einen Arbeitshub aus und bearbeitet dabei ein auf der Werkstückauflage 28, 29 bzw. der Werkstückabstützung 8 gelagertes Werkstück 10. Durch eine entgegengesetzte Bewegung der Antriebskeilelemente 122, 123 wird der Stößel 12 wiederum entlang der Hubachse 14 angehoben bzw. nach oben bewegt.

Die vorbeschriebene Hubantriebsvorrichtung 13 gemäß Figur 2 ist bevorzugt baugleich als untere Hubantriebsvorrichtung 27 ausgebildet und nimmt das Unterwerkzeug 9 auf.

In Figur 3 ist ein schematisches Diagramm einer möglichen Hubbewegung des Stößels 12 dargestellt. Das Diagramm zeigt einen Hubverlauf entlang der Y-Achse und der Z-Achse. Durch eine überlagerte Ansteuerung einer Verfahrbewegung des Stößels 12 entlang der Hubachse 14 und entlang der Positionierachse 16 kann beispielsweise eine schräg verlaufende Hubbewegung des Hubstößels 12 nach unten auf das Werkstück 10 zu angesteuert werden, wie dies durch die erste Gerade A dargestellt ist. Darauffolgend nach Durchführung des Hubes kann der Stößel 12 beispielsweise senkrecht abgehoben werden, wie dies durch die Gerade B dargestellt ist. Anschließend erfolgt beispielsweise eine ausschließliche Verfahrbewegung entlang der Y-Achse gemäß der Geraden C, um den Stößel 12 für eine neue Arbeitsposition zum Werkstück 10 zu positionieren. Darauffolgend kann sich beispielsweise die zuvor beschriebene Arbeitsabfolge wiederholen. Sofern für einen nachfolgenden Bearbeitungsschritt das Werkstück 10 auf der Werkstückauflagefläche 28, 29 verfahren wird, kann auch eine Verfahrbewegung entlang der Geraden C fallen.

Die im Diagramm in Figur 3 dargestellte mögliche Hubbewegung des Stößels 12 am Oberwerkzeug 11 ist bevorzugt mit einem stillstehend gehaltenen Unterwerkzeug 9 kombiniert. Dabei ist das Unterwerkzeug 9 derart innerhalb des Maschinenrahmens 2 positioniert, dass am Ende eines Arbeitshubes des Oberwerkzeuges 11 das Ober- und Unterwerkzeug 11, 9 eine definierte Position einnehmen.

Dieser beispielhafte überlagerte Hubverlauf kann sowohl für das Oberwerkzeug 11 als auch das Unterwerkzeug 9 angesteuert werden. In Abhängigkeit der zu erfolgenden Bearbeitung des Werkstückes 10 kann eine überlagerte Hubbewegung des Oberwerkzeuges und/oder Unterwerkzeuges 9 angesteuert werden.

In Figur 4 ist ein schematisches Diagramm dargestellt, welches eine Hubbewegung des Stößels 12 gemäß der beispielhaft dargestellten Linie D entlang einer Y-Achse und einer Z-Achse darstellt. Abweichend zu Figur 3 ist bei diesem Ausführungsbeispiel vorgesehen, dass eine Hubbewegung des Stößels 12 einen Kurvenverlauf oder Bogenverlauf durchlaufen kann, indem eine Überlagerung der Verfahrbewegungen in Y-Richtung und Z-Richtung entsprechend durch die Steuerung 15 angesteuert wird. Durch eine solche flexible Überlagerung der Verfahrbewegungen in X- und Z-Richtung lassen sich spezifische Bearbeitungsaufgaben lösen. Die Ansteuerung eines solchen Kurvenverlaufes kann sowohl für das Oberwerkzeug 11 und/oder Unterwerkzeug 9 vorgesehen sein.

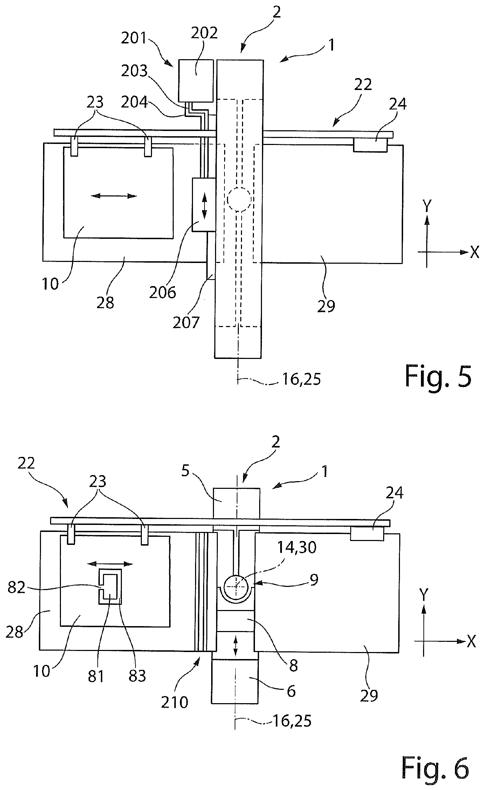

In Figur 5 ist eine schematische Ansicht auf die Werkzeugmaschine 1 gemäß Figur 1 dargestellt. An dem Maschinenrahmen 2 der Werkzeugmaschine 1 erstreckt sich seitlich jeweils eine Werkstückauflage 28, 29. Die Werkstückauflage 28 kann beispielsweise einer nicht näher dargestellten Beladestation zugeordnet sein, durch welche unbearbeitete Werkstücke 10 auf die Werkstückauflagefläche 28 aufgelegt werden. An die Werkstückauflagefläche 28, 29 angrenzend ist eine Vorschubeinrichtung 22 vorgesehen, welche mehrere Greifer 23 umfasst, um das auf die Werkstückauflage 28 aufgelegte Werkstück 10 zu greifen. Mittels der Vorschubeinrichtung 22 wird das Werkstück 10 in X-Richtung durch den Maschinenrahmen 2 hindurchgeführt. Vorzugsweise kann die Vorschubeinrichtung 22 auch in Y-Richtung verfahrbar angesteuert werden. Dadurch kann eine freie Verfahrbewegung des Werkstücks 10 in der X-Y Ebene vorgesehen sein. In Abhängigkeit der Arbeitsaufgabe kann das Werkstück 10 durch die Vorschubeinrichtung 22 sowohl in X-Richtung als auch entgegen der X-Richtung bewegbar sein. Diese Verfahrbewegung des Werkstücks 10 kann auf eine Verfahrbewegung des Oberwerkzeuges 11 und Unterwerkzeuges 9 in und entgegen der Y-Richtung für die jeweilige Bearbeitungsaufgabe angepasst sein.

Der Werkstückauflage 28 gegenüberliegend ist die weitere Werkstückauflage 29 am Maschinenrahmen 2 vorgesehen. Diese kann beispielsweise einer Entladestation zugeordnet sein. Alternativ kann Be- und Entladung des unbearbeiteten Werkstücks 10 und bearbeiteten Werkstücks 10 mit Werkstücken 81 auch derselben Werkstückauflage 28, 29 zugeordnet sein.

Die Werkzeugmaschine 1 kann des Weiteren eine Laserbearbeitungsvorrichtung 201, insbesondere eine Laserschneidmaschine, aufweisen, welche nur schematisch in einer Draufsicht in Figur 5 dargestellt ist. Diese Laserbearbeitungsvorrichtung 201 kann beispielsweise als eine CO₂-Laserschneidmaschine ausgebildet sein. Die Laserbearbeitungsvorrichtung 201 umfasst eine Laserquelle 202, welche einen Laserstrahl 203 erzeugt, der mittels einer schematisch dargestellten Strahlführung 204 zu einem Laserbearbeitungskopf, insbesondere Laserschneidkopf 206, geführt und in diesem fokussiert wird. Danach wird der Laserstrahl 204 durch eine Schneiddüse senkrecht zur Oberfläche des Werkstückes 10 ausgerichtet, um das Werkstück 10 zu bearbeiten. Der Laserstrahl 203 wirkt am Bearbeitungsort, insbesondere Schneidort vorzugsweise gemeinsam mit einem Prozessgasstrahl auf das Werkstück 10 ein. Die Schneidstelle, an welcher der Laserstrahl 203 auf das Werkstück 10 auftritt, ist benachbart zur Bearbeitungsstelle des Oberwerkzeuges 11 und Unterwerkzeuges 9.

Der Laserschneidkopf 206 ist durch einen Linearantrieb 207 mit einem Linearachsensystem zumindest in Y-Richtung, vorzugsweise in Y- und Z-Richtung, verfahrbar. Dieses Linearachsensystem, welches den Laserschneidkopf 206 aufnimmt, kann dem Maschinenrahmen 2 zugeordnet, daran befestigt oder darin integriert sein. Unterhalb eines Arbeitsraumes des Laserschneidkopfes 206 ist eine Strahldurchtrittsöffnung 210 in der Werkstückauflage 28 vorgesehen. Vorzugsweise kann unterhalb der Strahldurchtrittsöffnung 210 eine Strahlauffangvorrichtung für den Laserstrahl 21 vorgesehen sein. Die Strahldurchtrittsöffnung 210 und gegebenenfalls die Strahlauffangvorrichtung können auch als eine Baueinheit ausgebildet sein.

Die Laserbearbeitungsvorrichtung 201 kann alternativ auch einen Festkörperlaser als Laserquelle 202 aufweisen, dessen Strahlung mit Hilfe eines Lichtleitkabels zum Laserschneidkopf 206 geführt wird.

Figur 6 zeigt eine schematische Schnittansicht gemäß Linie VI-VI in Figur 1. Bei dieser Ansicht auf die Werkzeugmaschine 1 sind die vertikalen Rahmenschenkel 5 und 6 als auch der obere horizontale Rahmenschenkel 3 ausgeblendet. Diese Ansicht zeigt, dass sich die Werkstückauflage 28, 29 bis unmittelbar an eine Werkstückabstützung 8 erstreckt, welche das Unterwerkzeug 9 zumindest teilweise umgibt. Innerhalb sich eines dazwischen ergebenden Freiraumes ist das Unterwerkzeug 9 entlang der unteren Positionierachse 25 in und entgegen der Y-Richtung verfahrbar. Des Weiteren ist die Strahldurchtrittsöffnung 210 in der Werkstückauflage 28 dargestellt, sofern diese Werkzeugmaschine 1 mit einer Laserbearbeitungsvorrichtung 21 ausgestattet ist.

Auf der Werkstückauflage 28 liegt beispielsweise ein bearbeitetes Werkstück 10 auf, bei welchem ein Werkstückteil 81 von einem Schneidspalt 83 beispielsweise durch eine Stanzbearbeitung oder durch eine Laserstrahlbearbeitung bis auf eine Restverbindung 82 freigeschnitten ist. Durch diese Restverbindung wird das Werkstück 81 in dem Werkstück 10 bzw. dem verbleibenden Restgitter gehalten. Zum Abtrennen des Werkstückteils 81 vom Werkstück 10 wird das Werkstück 10 mittels der Vorschubeinrichtung 22 zum Ober- und Unterwerkzeug 11, 9 für einen Abstands- und Ausschleusschritt positioniert. Dabei wird die Restverbindung 82 durch einen Stanzhub des Oberwerkzeuges 11 zum Unterwerkzeug 9 getrennt. Das Werkstückteil 81 kann beispielsweise durch teilweises Absenken der Werkstückabstützung 8 nach unten ausgeschleust werden. Alternativ kann bei größeren Werkstückteilen 81 das freigeschnittene Werkstückteil 81 wieder zurück auf die Werkstückauflage 28 oder auf die Werkstückauflage 29 übergeführt werden, um das Werkstückteil 81 und das Restgitter zu entladen. Auch können kleine Werkstückteile 81 gegebenenfalls durch eine Öffnung im Unterwerkzeug 9 ausgeschleust werden.

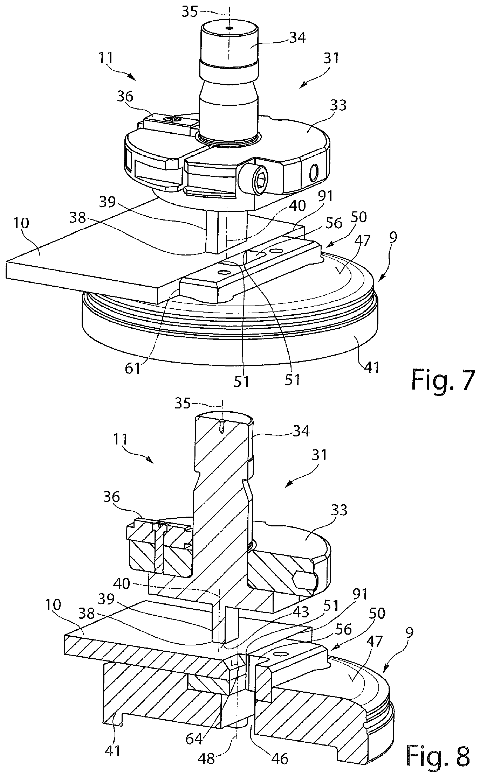

In Figur 7 ist eine perspektivische Ansicht eines Werkzeuges 31 dargestellt, welches beispielsweise zur Bearbeitung von Werkstücken 10 in der Werkzeugmaschine 1 einsetzbar ist. Die Figur 8 zeigt eine schematische Schnittansicht von Figur 7. Dieses Werkzeug 31 umfasst ein Oberwerkzeug 11 und ein Unterwerkzeug 9. Das Oberwerkzeug 11 weist einen Grundkörper 33 sowie einen Einspannzapfen 34 auf. Diese sind symmetrisch zu einer gemeinsamen Positionsachse 35 angeordnet. An dem Grundkörper 33 ist des Weiteren ein Indexierkeil 36 zum Ausrichten des Oberwerkzeuges im Stößel 12, beziehungsweise in einer Werkzeugaufnahme an der Werkzeugmaschine 1 vorgesehen. Bei diesem Ausführungsbeispiel ist vorgesehen, dass ein Grundkörper 33 als Klemmring ausgebildet ist, so dass unter Klemmung der Einspannschaft 34 und vorteilhafterweise ein einstückig daran angeordneter Werkzeugkörper 39 eingespannt gehalten ist. Alternativ kann der Grundkörper 31 und/oder Werkzeugkörper 39 und/oder der Einspannschaft 34 einteilig ausgebildet sein. Eine Längsachse 40 des Werkzeugkörpers 39 erstreckt sich in der Positionsachse 35. Alternativ kann der Werkzeugkörper 39 beziehungsweise die Längsachse 40 des Werkzeugkörpers 39 auch seitlich versetzt zur Positionsachse 35 vorgesehen sein. Am unteren Ende des Werkzeugkörpers 39 ist vorzugsweise eine Schneidkante 38 ausgebildet. Bei diesem Werkzeugkörper 39 ist rechtwinklig zur Längsachse 40 eine Stempelfläche 43 ausgebildet, an der ein, zwei, drei oder vier Schneidkanten 38 ausgebildet sein können.

Das Unterwerkzeug 9 umfasst einen Grundkörper 41, der an seiner Oberseite eine Auflagefläche 47 zur Auflage des Werkstücks 10 aufweist. Innerhalb des Grundkörpers 41 ist bevorzugt eine Öffnung 46 vorgesehen, welche den Grundkörper 41 vollständig durchquert. Bei diesem Ausführungsbeispiel ist nicht näher dargestellt ein Justierelement am Grundkörper 41 vorgesehen, welches beispielsweise gegenüber dem Außenumfang des Grundkörpers 41 hervorstehen kann, um dieses Unterwerkzeug 9 bezüglich deren Ausrichtung um eine Positionsachse 48 einzustellen.

Bei diesem Ausführungsbeispiel umfasst das Unterwerkzeug 9 einen Gegenschneideinsatz 50, der an dem Grundkörper 41 lösbar befestigt ist. Dieser Gegenschneideinsatz 50 weist zumindest eine Gegenschneidkante 51 auf. Bevorzugt ist diese Gegenschneidkante 51 zur Öffnung 46 hin ausgerichtet.

Des Weiteren ist dieser Gegenschneideinsatz 50 gegenüber der Auflagefläche 47 erhöht ausgebildet, so dass sich benachbart zur Gegenschneidkante 51 eine Abstützfläche 61 bildet, an der das Werkstück 10 für eine nachfolgende Bearbeitung definiert anliegt. Im Ausführungsbeispiel sind zwei mit Abstand zueinander angeordneten Gegenschneidkanten 51 vorgesehen, welche durch eine U-förmige Ausnehmung getrennt zueinander beabstandet sind.

Das Werkstück 10, welches zur Bearbeitung ansteht, weist eine rechtwinklige Werkstückkante 91 auf. Diese Werkstückkante 91 soll abgeschrägt werden, beziehungsweise eine Fase 64 aufweisen.

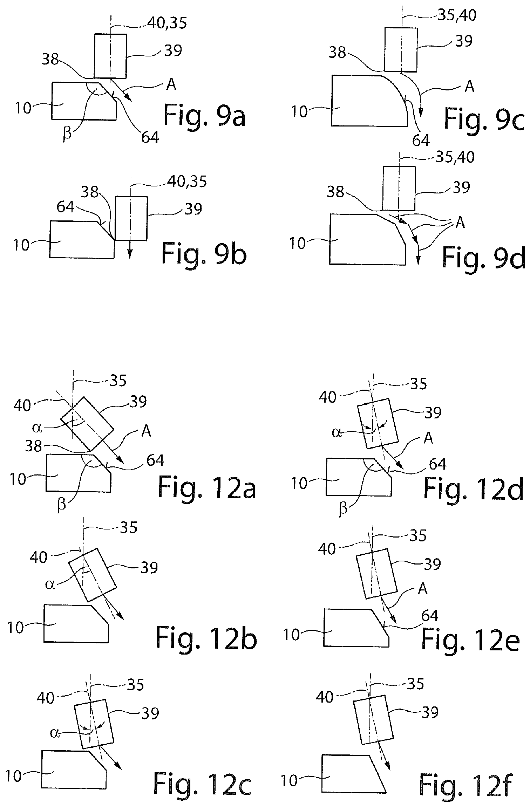

Die Herstellung der Fase 64 sowie alternative Ausführungsformen einer Fase 64 werden nachfolgend anhand den Figuren 9a bis 9e näher beschrieben. Für diese alternativen Ausführungsformen wird ein Oberwerkzeug 11 und Unterwerkzeug 9 gemäß den Figuren 7 und 8 eingesetzt. Zur Herstellung einer Fase 64 wird das Werkstück 10 bezüglich einer Abstützfläche 61 zum Unterwerkzeug 9 ausgerichtet. Das Oberwerkzeug 11 wird bezüglich dessen Positionsachse für einen nachfolgenden Arbeitshub zur Positionsachse 48 des Unterwerkzeugs 9 ausgerichtet. Darauffolgend wird ein Arbeitshub durchgeführt. Dieser kann zumindest zwei, vorzugsweise drei Hubphasen aufweisen. In einer ersten Hubphase wird das Oberwerkzeug 11 abgesenkt und auf das Unterwerkzeug zubewegt, bis eine Schneidkante 38 des Werkzeugkörpers 39 zur Anlage auf einer Oberfläche an dem Werkstück 10 kommt oder eine Position geringfügig oberhalb dem Werkstück 10 einnimmt. Darauffolgend wird die zweite Hubphase eingeleitet, indem das Oberwerkzeug 11 mit einer linearen Hubbewegung gemäß Pfeil A angesteuert wird, welche beispielsweise einen Winkel β von 45° zur Hubachse 14 aufweist. Dadurch erfolgt ein Abscheren oder Abtragen der Werkstückkante 91 zur Bildung der Fase 64. Nachdem die Schneidkante 38 des Werkzeugkörpers 39 bündig zur Stirnseite des Werkstücks 10 ist, kann der Arbeitshub beendet sein oder eine dritte Hubphase eingeleitet werden, in der beispielsweise eine Verfahrbewegung entlang der Hubachse 40 erfolgt, um gegebenenfalls abgeschertes Material vollständig abzutrennen, wie dies in Figur 9b dargestellt ist.

Alternativ zu der vorbeschriebenen Arbeitsweise eines ersten Arbeitshubes kann vorgesehen sein, dass nach dem Positionieren des Werkstücks 10 an der Abstützfläche 61 des Unterwerkzeugs 9 ein Arbeitshub mit einer ersten Hubphase dahingehend durchgeführt wird, dass ausgehend von der zuletzt eingenommenen Position des Oberwerkzeugs 11 eine erste Hubphase eingeleitet wird, so dass der Werkzeugkörper 39 unmittelbar oberhalb der Oberfläche des Werkstücks 10 positioniert wird, wie dies in Figur 9a dargestellt ist. Diese erste Hubphase kann bereits eine überlagerte Bewegung aus eine Y-Richtung und Z-Richtung aufweisen.

Alternativ kann auch vorgesehen sein, dass das Unterwerkzeug 9 relativ zum Oberwerkzeug 11 positioniert wird, wobei vorteilhafterweise über die Vorschubeinrichtung 22 sichergestellt bleibt, dass das Werkstück 10 an der Abstützfläche 61 anliegt.

In Figur 9c ist eine alternative Ausführungsform zu Figur 9a und 9b dargestellt. Die dort angebrachte Fase 64 am Werkstück 10 ist gerundet oder weist einen bogenförmigen Verlauf auf. Zur Herstellung einer solchen Fase 64 weicht die Ansteuerung der zweite Hubphase von der vorbeschriebenen zweiten Hubphase in Figur 9a ab. Dabei ist vorgesehen, dass das Oberwerkzeug 11 mit einer überlagerten Hubbewegung entlang der Hubachse 14 und Verfahrbewegung entlang der Positionierachse 16 angesteuert wird, so dass die Schneidkante 38 einem bogenförmigen oder kurvenförmigen Verlauf folgt. Dadurch entsteht die bogenförmige Fase 64. Der Verlauf der Fase 64 beziehungsweise die Krümmung der Fase 64 steht in Abhängigkeit der Anteile der Hubbewegung entlang der Hubachse 14 und der Verfahrbewegung entlang der Positionierachse 16 bei deren Überlagerung.

In Figur 9d ist eine alternative Ausführungsform zu Figur 9a dargestellt. Dabei ist vorgesehen, dass während der zweiten Hubphase nicht nur eine Verfahrbewegung zur Bildung einer geradlinigen Fase 64 beispielsweise unter einem Winkel von 45° angesteuert wird, sondern dass mehrere Fasen 64 an dem Werkstück 10 ausgebildet sind. Die Figur 9d zeigt beispielsweise zwei aufeinanderfolgende und in verschiedenen Winkeln ausgerichtete Fasen 64 auf.

Die Anzahl von mehreren aneinander gereihten Fasen 64 als auch deren Winkelposition ist wiederum wahlweise mittels der Steuerung 15 ansteuerbar.

Alternativ kann vorgesehen sein, dass eine flächige Fase 64 gemäß Figur 9a und eine gekrümmte Fase 64 gemäß Figur 9c ein- oder mehrfach auch miteinander kombiniert werden.

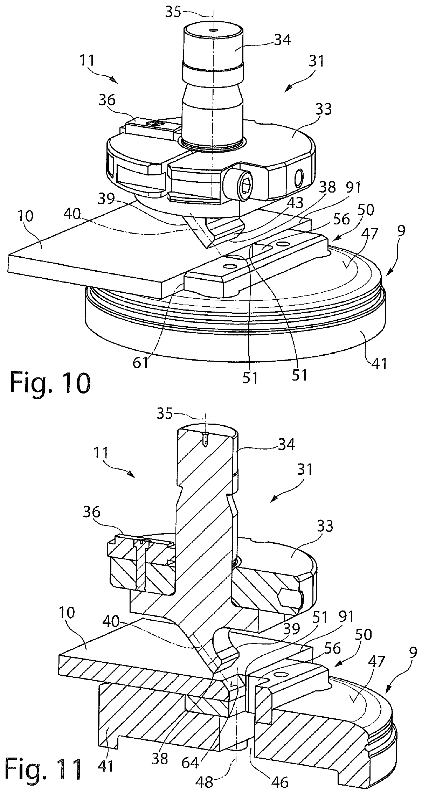

In Figur 10 ist eine perspektivische Ansicht einer alternativen Ausführungsform eines Oberwerkzeugs 11 zu Figur 7 dargestellt. Die Figur 11 zeigt eine schematische Schnittansicht des Ober- und Unterwerkzeugs 11, 9 in Figur 10.

Diese Ausführungsform in Figur 10 und 11 weicht dahingehend von der in Figur 7 und 8 ab, dass der Werkzeugkörper 39 eine Längsachse 40 aufweist, die außerhalb der Positionsachse 35 liegt. Bevorzugt ist ein Winkel a zwischen 0 und 90° zwischen der Positionsachse 35 und der Längsachse 40 vorgesehen. Im Übrigen gelten die Ausführungen zu den Figuren 7 und 8.

Nachfolgend werden anhand den Figuren 12a bis 12f verschiedene Ausführungsformen beschrieben, bei denen die Fase 64 am Werkstück 10 mit einem Oberwerkzeug 11 hergestellt werden können, die einen gegenüber der Positionsachse 35 geneigten Werkzeugkörper 39 aufweisen. Dabei ist möglich, dass verschiedene Winkellagen der Längsachse 40 zur Positionsachse 35 auch die Herstellung von Teilekanten beziehungsweise Fasen 64 mit gleichen Winkellagen ermöglichen.

In Figur 12a ist beispielsweise die Ausgestaltung einer Fase 64 in einem Winkel β von 45° zur Stirnseite, beziehungsweise Oberseite des Werkstücks 10 dargestellt. Hierbei wird ein Werkzeugkörper 39 verwendet, dessen Längsachse 40 um einen Winkel a von 45° zur Positionsachse 35 ausgerichtet ist.

Die zu den Figuren 9a und 9b beschriebenen Ausführungsformen eines Arbeitshubes gelten auch vorliegend. Die zweite Hubphase des Arbeitshubes zur Durchführung der Fase 64 von einem Winkel β mit 45° wird bei einem Werkzeugkörper 39, dessen Längsachse in einem Winkel a von 45° zur Positionsachse 35 ausgerichtet ist, vorteilhafterweise dahingehend angesteuert, dass eine lineare Verfahrbewegung des Hubes in der zweiten Hubphase entlang der Längsachse 40 angesteuert wird, so dass die Längsachse 40 und die Bewegungsrichtung gemäß Pfeil A deckungsgleich sind.

Die Herstellung einer Fase 64 in einem Winkel β von 45° am Werkstück 10 gemäß Figur 12b weicht dahingehend von der Ausführungsform gemäß Figur 12a ab, dass beispielsweise ein Werkzeugkörper 39 mit einer Längsachse 40 eingesetzt wird, der einen Winkel a von beispielsweise 30° zur Positionsachse 35 aufweist. Die Verfahrbewegung gemäß der zweiten Hubphase erfolgt gemäß Pfeil A mit einem Winkel von 45° zur Hubachse 14, so dass die Verfahrbewegung in der zweiten Hubphase abweichend zur Längsachse 40 des Werkzeugkörpers 39 ist.

Die Figur 12c zeigt eine weitere Alternative zu den Figuren 12 und 12b. Es wird wiederum eine Fase 64 mit einem Winkel β von 45° am Werkstück 10 hergestellt. Dabei wird ein Werkzeugkörper 39 mit einer Längsachse 40 am Oberwerkzeug 11 eingesetzt, welcher um einen Winkel a von 15° außerhalb der Positionsachse 35 liegt. Die Verfahrbewegung gemäß Pfeil A in der zweiten Hubphase entspricht jedoch der Verfahrbewegung gemäß der zweiten Hubphase in den Ausführungsbeispielen gemäß Figur 12a und 12b.

Diese Ausführungsformen zeigen, dass die Herstellung einer Fase 64 dann gegeben ist, wenn der Winkel a der Längsachse 14 des Werkzeugkörpers 39 zur Positionsachse 35 gleich oder kleiner ist als der einzubringende Winkel β für die Fase 64 am Werkstück 10.

In den nachfolgenden Figuren 12d bis 12f werden weitere Fasen 64 beschrieben, die bezüglich deren Winkel β als auch deren Länge an der Stirnseite des Werkstückes 10 voneinander abweichen. Bei diesen Ausführungsformen gemäß Figur 12d bis 12f wird beispielsweise ein Werkzeugkörper 39 mit einer Längsachse 40 eingesetzt, dessen Längsachse 40 beispielsweise um einen Winkel a von 50° gegenüber der Positionsachse 35 geneigt ist.

In Figur 12d ist eine beispielhafte Anordnung einer Fase 64 dargestellt. Hierbei kann es sich um ein sogenanntes Brechen der Werkstückkante 91 handeln. Die Fase 64 ist bezüglich der Höhe der Stirnseite nur gering ausgebildet. In Abhängigkeit der Ausrichtung der linearen Hubbewegung des Oberwerkzeugs 11 in der zweiten Hubphase kann wiederum die Lage der Fase 64, beziehungsweise der Winkel β der Fase 64 zur Werkstückoberfläche des Werkstücks 10 ausgerichtet sein. Beispielsweise ist eine Fase 64 von 30°dargestellt.

In Figur 12e ist eine Ausführungsform dargestellt, bei welcher die Fase 64 einen Winkel von 60° zur Werkstückoberfläche aufweist. Gleichzeitig erstreckt sich die Fase 64 beispielsweise über zwei Drittel der Höhe der Stirnseite des Werkstücks 10.

In Figur 12f ist eine weitere alternative Ausführungsform zur Bildung einer Fase 64 dargestellt. Diese Fase 64 erstreckt sich beispielsweise vollständig über die gesamte Stirnfläche beziehungsweise die Dicke des Werkstücks 10. Die Ausrichtung der Fase 64 erfolgt beispielsweise in einem Winkel von 45° zur Werkstückoberfläche des Werkstücks 10.

Die lineare Hubbewegung des Oberwerkzeuges 11 in der zweiten Hubphase wird entsprechend des auszubildenden Winkels der Fase 64 angesteuert.

Bei den vorbeschriebenen Ausführungsbeispielen kann das Unterwerkzeug 9 ruhend sein und der Arbeitshub durch das Oberwerkzeug 11 erfolgen. Alternativ kann auch eine vertauschte Ansteuerung von Ober- und Unterwerkzeug 11, 9 vorgesehen sein. Auch kann eine Aufteilung der Verfahrparameter auf das Ober- und Unterwerkzeug 11, 9 vorgesehen sein, um den Arbeitshub durchzuführen. Dabei kann eine Relativbewegung von Ober- und Unterwerkzeug 11, 9 in der Hubachse 14, 30 und/oder entlang der Positionierachse 16, 25 erfolgen.

## Patentansprüche

1. Werkzeugmaschine zum Bearbeiten von plattenförmigen Werkstücken (10), vorzugsweise Blechen,
- mit einem Oberwerkzeug (11), welches entlang einer Hubachse (14) mit einer Hubantriebsvorrichtung (13) in Richtung auf ein mit dem Oberwerkzeug (11) zu bearbeitenden Werkstück (10) und in Gegenrichtung bewegbar ist und welches mit mindestens einer motorischen Antriebsanordnung entlang einer senkrecht zur Hubachse (14) verlaufenden oberen Positionierachse (16) positionierbar ist,
- mit einem Unterwerkzeug (9), welches zum Oberwerkzeug (11) ausgerichtet und mit mindestens einer motorischen Antriebsanordnung (26) entlang einer unteren Positionierachse (25) positionierbar ist, die senkrecht zur Hubachse (14) des Oberwerkzeuges (11) ausgerichtet ist,
- mit einem Maschinenrahmen (2), in dessen Rahmeninnenraum (7) das Ober- und Unterwerkzeug (11, 9) verfahrbar ist, und
- mit einer Steuerung (15), durch welche die motorischen Antriebsanordnungen (17, 26) zum Verfahren des Ober- und Unterwerkzeuges (11, 9) ansteuerbar sind, und
- die Verfahrbewegung des Oberwerkzeuges (11) entlang der oberen Positionierachse (16) und die Verfahrbewegung des Unterwerkzeuges (9) entlang der unteren Positionierachse (25) jeweils unabhängig voneinander ansteuerbar sind, wobei
- das Oberwerkzeug (11) mit einer Verfahrbewegung entlang der oberen Positionierachse (16) und einer Hubbewegung entlang der Hubachse (14) der oberen Hubantriebsvorrichtung (13) überlagert ansteuerbar ist.

2. Werkzeugmaschine nach Anspruch 1, **dadurch gekennzeichnet, dass** die Verfahrbewegung des Oberwerkzeuges (11) und Unterwerkzeuges (9) zeitgleich und in der Verfahrrichtung und/oder der Verfahrgeschwindigkeit unabhängig mit jeweils einer motorischen Antriebsanordnung (17, 26) ansteuerbar sind.

3. Werkzeugmaschine nach Anspruch 1 oder 2, **dadurch gekennzeichnet, dass** das Unterwerkzeug (9) durch eine untere Hubantriebsvorrichtung (27) entlang der Hubachse (14) in Richtung auf das Werkstück (10) zu und in Gegenrichtung bewegbar ist und vorzugsweise mit einer Verfahrbewegung entlang der unteren Positionierachse (25) überlagert ansteuerbar ist.

4. Werkzeugmaschine nach Anspruch 1, **dadurch gekennzeichnet, dass** die obere Hubantriebsvorrichtung (13) und die untere Hubantriebsvorrichtung (27) unabhängig voneinander ansteuerbar sind, und vorzugsweise die obere Hubantriebsvorrichtung (13) und die untere Hubantriebsvorrichtung (27) baugleich sind.

5. Werkzeugmaschine nach einem der vorhergehenden Ansprüche, **dadurch gekennzeichnet, dass** in einer Ebene senkrecht zur Hubachse (14) des Oberwerkzeuges (11) ein- oder beidseitig zum Maschinenrahmen (2) zumindest eine an den Rahmeninnenraum (7) angrenzende Werkstückauflage (28, 29) vorgesehen ist, auf welcher in einer Auflageebene das plattenförmige Werkstück (10) zum Ober- und Unterwerkzeug (11, 9) zur Bearbeitung positionierbar ist, und vorzugsweise Werkzeugmaschine nach Anspruch 5, **dadurch gekennzeichnet, dass** benachbart zur Werkstückauflage (28, 29) und den Rahmeninnenraum (7) durchquerend eine Vorschubeinrichtung (22) vorgesehen ist, entlang der Greifer (23) zum Greifen des plattenförmigen Werkstücks (10) verfahrbar vorgesehen sind, durch welche das plattenförmige Werkstück (10) in der Auflageebene der Werkstückauflage (28, 29) relativ zum Ober- und Unterwerkzeug (11, 9) verschiebbar ist und vorzugsweise an der Vorschubeinrichtung (22) ein Magazin (24) für Werkzeuge (11, 9) zur Bearbeitung des Werkstückes (10) vorgesehen sind.

6. Werkzeugmaschine nach einem der vorhergehenden Ansprüche, **dadurch gekennzeichnet, dass** das Unterwerkzeug (9) in eine gegenüber einer Auflageebene der Werkstückauflage (28, 29) abgesenkten Position absenkbar und von zumindest einer Werkstückauflage (28, 29) überfahrbar ist und im Rahmeninnenraum (7) eine durch die Werkstückauflage (28, 29) geschlossene oder verschließbare Auflageebene gebildet ist.

7. Werkzeugmaschine nach einem der vorhergehenden Ansprüche, **dadurch gekennzeichnet, dass** dem Maschinenrahmen (2) zumindest eine weitere Werkstückbearbeitungsvorrichtung (201) zugeordnet oder daran angeordnet ist, welche in X-, Y- und/oder Z-Richtung verfahrbar ist und vorzugsweise Werkzeugmaschine nach Anspruch 10, **dadurch gekennzeichnet, dass** die Werkstückbearbeitungsvorrichtung (201) parallel zum Ober- und Unterwerkzeug (11, 9), insbesondere entlang eines oberen horizontalen Rahmenschenkels (3) des Maschinenrahmens (2), verfahrbar ist und/oder Werkzeugmaschine nach Anspruch 10 oder 11, **dadurch gekennzeichnet, dass** die zumindest eine weitere Werkstückbearbeitungsvorrichtung (201) unabhängig vom Ober- und/oder Unterwerkzeug (11, 9) verfahrbar angesteuert ist.

8. Werkzeugmaschine nach Anspruch 7, **dadurch gekennzeichnet, dass** die Werkstückbearbeitungsvorrichtung (201) eine Laserbearbeitungsvorrichtung ist und vorzugsweise zumindest einen Laserbearbeitungskopf (206) umfasst, der entlang dem Maschinenrahmen (2) verfahrbar ist, und vorzugsweise der Laserbearbeitungskopf (206) mit einem zumindest ein-achsigen Linearantrieb (107) verfahrbar ist, der an dem Maschinenrahmen (2) angeordnet ist und insbesondere Werkzeugmaschine nach einem der Ansprüche 10 bis 14, **dadurch gekennzeichnet, dass** in der Werkstückauflage (28, 29) eine Strahldurchtrittsöffnung (210), vorzugsweise eine Strahlfangvorrichtung, entlang der Verfahrstrecke des Laserschneidkopfes (206) vorgesehen ist.

9. Werkzeugmaschine nach einem der Ansprüche 7 oder 8, **dadurch gekennzeichnet, dass** die Antriebsanordnung (17, 26) des Oberwerkzeuges (11) und/oder Unterwerkzeuges (9) und die Laserbearbeitungsvorrichtung (201) durch dieselbe Steuerung (15) ansteuerbar sind.

10. Verfahren zum Bearbeiten von plattenförmigen Werkstücken (10), insbesondere von Blechen, mit einer Werkzeugmaschine (1),
- bei dem ein Oberwerkzeug (11), welches entlang einer Hubachse (14) mit einer Hubantriebsvorrichtung (13) in Richtung auf ein mit dem Oberwerkzeug (11) zu bearbeitenden Werkstück (10) und in Gegenrichtung bewegbar ist, mit mindestens einer motorischen Antriebsanordnung (17) entlang einer senkrecht zur Hubachse (14) verlaufenden oberen Positionierachse (16) positioniert wird,
- bei dem ein Unterwerkzeug (9), welches zum Oberwerkzeug (11) ausgerichtet, mit mindestens einer motorischen Antriebsanordnung (26) entlang einer unteren Positionierachse (25) positioniert wird, die senkrecht zur Hubachse (14) des Oberwerkzeuges (11) ausgerichtet ist,
- bei dem das Ober- und Unterwerkzeug (11, 9) im Rahmeninnenraum (7) eines Maschinenrahmens (2) verfahren wird, und
- bei dem mit einer Steuerung (15), die motorischen Antriebsanordnungen (17, 26) zum Verfahren des Ober-und Unterwerkzeuges (11, 9) angesteuert werden,
- bei dem das Werkstück (10) zwischen dem Oberwerkzeug (11) und Unterwerkzeug (9) positioniert wird, und
- bei dem die Verfahrbewegung des Oberwerkzeuges (11) entlang der oberen Positionierachse (16) und die Verfahrbewegung des Unterwerkzeuges (9) entlang der unteren Positionierachse (25) jeweils unabhängig voneinander angesteuert werden, wobei
- das Oberwerkzeug (11) mit einer Verfahrbewegung entlang der oberen Positionier-achse (16) und einer Hubbewegung entlang der Hubachse (14) der oberen Hubantriebsanordnung (13) überlagert angesteuert wird.

11. Verfahren nach Anspruch 10, **dadurch gekennzeichnet, dass** das Oberwerkzeug (11) und/oder Unterwerkzeug (9) mit einer Verfahrbewegung entlang der Positionierachse (16, 25) und einer Hubbewegung entlang der Hubachse (14, 30) überlagert angesteuert wird oder Verfahren nach Anspruch 17 oder 18, **dadurch gekennzeichnet, dass** das Oberwerkzeug (11) mit einer Verfahrbewegung entlang der oberen Positionierachse (16) und einer Hubbewegung entlang der Hubachse (14) überlagert angesteuert wird und das Unterwerkzeug (9) ruhend angesteuert wird, so dass das Oberwerkzeug (11) und Unterwerkzeug (9) nach einem Arbeitshub in einer aufeinander abgestimmten Endposition zueinander angeordnet sind.

12. Verfahren nach Anspruch 10 oder 11, **dadurch gekennzeichnet, dass** das Oberwerkzeug (11) und/oder Unterwerkzeug (9) mit zumindest einer linearen Hubbewegung angesteuert wird, deren Richtung zumindest teilweise außerhalb der Hubachse (14, 30) liegt oder Verfahren nach einem der Ansprüche 17 bis 19, **dadurch gekennzeichnet, dass** das Oberwerkzeug (11) und/oder Unterwerkzeug (9) mit einer kurvenförmigen oder bahnförmigen Hubbewegung angesteuert wird, deren Richtung zumindest teilweise außerhalb der Hubachse (14, 30) liegt.

13. Verfahren nach einem der Ansprüche 10 bis 12, **dadurch gekennzeichnet, dass** das Oberwerkzeug (11) einen Werkzeugkörper (39) aufweist, dessen Längsachse (40) parallel zur Positionsachse (35) ausgerichtet ist oder in der Positionsachse (35) liegt und zumindest eine Schneidkante (38) aufweist, die vorzugsweise rechtwinklig zur Positionsachse (35) ausgerichtet ist, und dass dieses Oberwerkzeug (11) zur Herstellung einer schrägen oder gekrümmten Werkstückkante (91) in einer ersten Hubphase eines Arbeitshubes entlang der Hubachse (14) auf das Werkstück (10) zugeführt wird, in einer zweiten Hubphase mit einer linearen Hubbewegung oder einer kurvenförmigen Hubbewegung, welche zumindest teilweise außerhalb der Hubachse (14) liegt, angesteuert und die Werkstückkante (91) abgetragen wird.

14. Verfahren nach einem der Ansprüche 10 bis 12, **dadurch gekennzeichnet, dass** das Oberwerkzeug (11) einen Werkzeugkörper (39) aufweist, dessen Längsachse (40) geneigt zur Positionsachse (35) ausgerichtet ist und zumindest eine Schneidkante (38) aufweist, die vorzugsweise rechtwinklig zur Positionsachse (35) oder Längsachse (40) ausgerichtet ist und dass dieses Oberwerkzeug (11) zur Herstellung einer schrägen oder gekrümmten Werkstückkante (91) in einer ersten Hubphase eines Arbeitshubes entlang der Hubachse (14) auf das Werkstück (10) zugeführt wird, in einer zweiten Hubphase mit einer linearen Hubbewegung oder einer kurvenförmigen Hubbewegung, welche zumindest teilweise außerhalb der Hubachse (14) liegt, angesteuert und die Werkstückkante (91) abgetragen wird.

15. Verfahren nach Anspruch 13 oder 14, **dadurch gekennzeichnet, dass** das Oberwerkzeug (11) mit einer auf die zweite Hubphase folgenden dritten Hubphase angesteuert wird, bei welcher eine Hubbewegung entlang der Hubachse (14) für ein letztes Abtrennen eines Materials des Werkstücks (10) zur Fertigstellung der Werkstückkante (91) angesteuert wird.

16. Verfahren nach einem der Ansprüche 10 bis 15, **dadurch gekennzeichnet, dass** das Oberwerkzeug (11) und/oder Unterwerkzeug (9) mit der Hubantriebsvorrichtung (13, 27) durch eine Drehung um die Positionsachse (35, 48) zueinander ausgerichtet werden.

## Claims

1. Machine tool for processing planar workpieces (10), preferably metal sheets,
- comprising an upper tool (11), which is moveable along a stroke axis (14) by means of a stroke drive device (13) in the direction of a workpiece (10) to be processed by the upper tool (11) and in the opposite direction and which is positionable by means of at least one motor drive assembly along an upper positioning axis (16) running perpendicular to the stroke axis (14),
- comprising a lower tool (9), which is oriented relative to the upper tool (11) and is positionable by means of at least one motor drive assembly (26) along a lower positioning axis (25) which is oriented perpendicular to the stroke axis (14) of the upper tool (11),
- comprising a machine frame (2), in the frame interior (7) of which the upper tool and lower tool (11, 9) are moveable, and
- comprising a controller (15), by means of which the motor drive assemblies (17, 26) are controllable in order to move the upper and lower tool (11, 9), and
- the traversing movement of the upper tool (11) along the upper positioning axis (16) and the traversing movement of the lower tool (9) along the lower positioning axis (25) are controllable independently of one another, wherein
- the upper tool (11) is controllable with a traversing movement along the upper positioning axis (16) and a stroke movement along the stroke axis (14) of the upper stroke drive device (13) in a superposed manner.

2. Machine tool according to claim 1, **characterised in that** the traversing movement of the upper tool (11) and lower tool (9) are controllable simultaneously and in respect of the direction of movement and/or the speed of movement are controllable independently by means of a motor drive assembly (17, 26) each.

3. Machine tool according to claim 1 or 2, **characterised in that** the lower tool (9) is controllable by means of a lower stroke drive device (27) to be moveable along the stroke axis (14) in the direction of the workpiece (10) and in the opposite direction and preferably with a traversing movement along the lower positioning axis (25) in a superposed manner.

4. Machine tool according to claim 1, **characterised in that** the upper stroke drive device (13) and the lower stroke drive device (27) are controllable independently of one another, an preferably the upper stroke drive device (13) and the lower stroke drive device (27) are of the same design.

5. Machine tool according to any one of the preceding claims, **characterised in that**, on one or both sides of the machine frame (2), at least one workpiece rest (28, 29) is provided adjacently to the frame interior (7) in a plane perpendicular to the stroke axis (14) of the upper tool (11), on which workpiece rest the planar workpiece (10) is positionable in a rest plane relative to the upper and lower tool (11, 9) for processing and preferably a feed device (22) is provided adjacently to the workpiece rest (28, 29) and passing through the frame interior (7), along which feed device grippers (23) for gripping the planar workpiece (10) are provided moveably, by means of which grippers the planar workpiece (10) can be displaced in the rest plane of the workpiece rest (28, 29) relative to the upper and lower tool (11, 9), with a magazine (24) for tools (11, 9) for processing the workpiece (10) preferably also being provided on the feed device (22).

6. Machine tool according to any one of the preceding claims, **characterised in that** the lower tool (9) is lowerable into a position lowered relative to a rest plane of the workpiece rest (28, 29) and is transferable from at least one workpiece rest (28, 29), with a rest plane closed or closable by the workpiece rest (28, 29) being formed in the frame interior (7).

7. Machine tool according to any one of the preceding claims, **characterised in that** at least one further workpiece processing device (201) is associated with the machine frame (2) or arranged thereon and is moveable in the X, Y and/or Z direction, and preferably the workpiece processing device (201) is moveable parallel to the upper and lower tool (11, 9), in particular along an upper horizontal frame limb (3) of the machine frame (2) and/or the at least one further workpiece processing device (201) is controlled so as to be moveable independently of the upper and/or lower tool (11, 9).

8. Machine tool according to claim 7, **characterised in that** the workpiece processing device (201) is a laser processing device and preferably comprises at least one laser processing head (206) which is moveable along the machine frame (2), and preferably the laser processing head (206) is moveable with an at least single-axis linear drive (107), which is arranged on the machine frame (2), and in particular a beam passage opening (210), preferably a beam capture device, is provided in the workpiece rest (28, 29) along the trajectory of the laser cutting head (206).

9. Machine tool according to claim 7 or 8, **characterised in that** the drive assembly (17, 26) of the upper tool (11) and/or lower tool (9) and the laser processing device (201) are controllable by the same controller (15).

10. Method for processing planar workpieces (10), in particular metal sheets, by means of a machine tool (1),
- in which an upper tool (11), which is moveable along a stroke axis (14) by means of a stroke drive device (13) in the direction of a workpiece (10) to be processed by means of the upper tool (11) and in the opposite direction, is positioned by means of at least one motor drive assembly (17) along an upper positioning axis (16) running perpendicular to the stroke axis (14),
- in which a lower tool (9), which is oriented relative to the upper tool (11), is positioned by means of at least one motor drive assembly (26) along a lower positioning axis (25), which is oriented perpendicular to the stroke axis (14) of the upper tool (11),
- in which the upper and lower tool (11, 9) are moved in the frame interior (7) of a machine frame (2), and
- in which the motor drive assemblies (17, 26) are actuated by means of a controller (15) in order to move the upper and lower tool (11, 9),
- in which the workpiece (10) is positioned between the upper tool (11) and lower tool (9), and
- in which the traversing movement of the upper tool (11) along the upper positioning axis (16) and the traversing movement of the lower tool (9) along the lower positioning axis (25) are controlled independently of one another, wherein
- the upper tool (11) is controlled with a traversing movement along the upper positioning axis (16) and a stroke movement along the stroke axis (14) of the upper stroke drive assembly (13) in a superposed manner.

11. Method according to claim 10, **characterised in that** the upper tool (11) and/or lower tool (9) are controlled with a traversing movement along the positioning axis (16, 25) and a stroke movement along the stroke axis (14, 30) in a superposed manner or **in that** the upper tool (11) is controlled with a traversing movement along the upper positioning axis (16) and a stroke movement along the stroke axis (14) in a superposed manner and the lower tool (9) is controlled to be still, such that the upper tool (11) and lower tool (9) after a working stroke are arranged relative to one another in an end position coordinated with one another.

12. Method according to claim 10 to 11, **characterised in that** the upper tool (11) and/or lower tool (9) are/is controlled with at least one linear stroke movement, the direction of which lies at least partially outside the stroke axis (14, 30) or **in that** the upper tool (11) and/or lower tool (9) is controlled with a curved or meandering stroke movement, the direction of which lies at least partially outside the stroke axis (14, 30).

13. Method according to any one of claims 10 to 12, **characterised in that** the upper tool (11) comprises a tool body (39), the longitudinal axis (40) of which is oriented parallel to the positioning axis (35) or lies in the positioning axis (35) and has at least one cutting edge (38), which is oriented preferably at right angles to the positioning axis (35), and **in that** this upper tool (11), in order to produce an oblique or curved workpiece edge (91), in a first stroke phase of a working stroke is fed towards the workpiece (10) along the stroke axis (14), in a second stroke phase is controlled with a linear stroke movement or a curved stroke movement, which lies at least partially outside the stroke axis (14), and the workpiece edge (91) is removed.

14. Method according to any one of claims 10 to 12, **characterised in that** the upper tool (11) comprises a tool body (39), the longitudinal axis (40) of which is oriented inclined relative to the positioning axis (35) and has at least one cutting edge (38), which preferably is oriented at right angles to the positioning axis (35) or longitudinal axis (40), and **in that** this upper tool (11), in order to produce an oblique or curved workpiece edge (91), in a first stroke phase of a working stroke is fed towards the workpiece (10) along the stroke axis (14), in a second stroke phase is controlled with a linear stroke movement or a curved stroke movement, which lies at least partially outside the stroke axis (14), and the workpiece edge (91) is removed.

15. Method according to claim 13 or 14, **characterised in that** the upper tool (11) is controlled with a third stroke phase following the second stroke phase, in which third stroke phase a stroke movement along the stroke axis (14) for a final separation of material of the workpiece (10) in order to finish the workpiece edge (91) is controlled.

16. Method according to any one of claims 10 to 15, **characterised in that** the upper tool (11) and/or lower tool (9) are oriented relative to one another by means of the stroke drive device (13, 27) by a rotation about the positioning axis (35, 48).

## Revendications

1. Machine-outil destinée à usiner des pièces (10) en forme de plaque, de préférence des tôles, pourvue
- d'un outil supérieur (11) qui peut être déplacé, grâce à un dispositif d'entraînement de levage (13), le long d'un axe de levage (14) en direction d'une pièce (10) qui doit être usinée avec l'outil supérieur (11), voire en direction opposée, et qui peut être positionné, grâce à au moins un mécanisme d'entraînement à moteur, le long d'un axe de positionnement supérieur (16) s'étendant perpendiculairement à l'axe de levage (14),
- d'un outil inférieur (9) qui est orienté par rapport à l'outil supérieur (11) et qui peut être positionné, grâce à au moins un mécanisme d'entraînement à moteur (26), le long d'un axe de positionnement inférieur (25) qui est orienté perpendiculairement à l'axe de levage (14) de l'outil supérieur (11),
- d'un bâti de machine (2) dans l'espace intérieur (7) duquel les outils supérieur et inférieur (11, 9) peuvent être déplacés, et
- d'une commande (15) grâce à laquelle les mécanismes d'entraînement à moteur (17, 26) destinés à déplacer les outils supérieur et inférieur (11, 9) peuvent être activés, et
- le mouvement de déplacement de l'outil supérieur (11) le long de l'axe de positionnement supérieur (16) et le mouvement de déplacement de l'outil inférieur (9) le long de l'axe de positionnement inférieur (25) peuvent être respectivement activés indépendamment l'un de l'autre,
selon laquelle l'outil supérieur (11) peut être activé afin d'effectuer de manière superposée un mouvement de déplacement le long de l'axe de positionnement supérieur (16) et un mouvement de course le long de l'axe de levage (14) du dispositif d'entraînement de levage (13).

2. Machine-outil selon la revendication 1, **caractérisée en ce que** les mouvements de déplacement de l'outil supérieur (11) et de l'outil inférieur (9) peuvent être activés de manière simultanée, et ce indépendamment du sens de déplacement et/ou de la vitesse de déplacement, grâce respectivement à un mécanisme d'entraînement à moteur (17, 26).

3. Machine-outil selon la revendication 1 ou 2, **caractérisée en ce que** l'outil inférieur (9) peut être déplacé, grâce à un dispositif d'entraînement de levage inférieur (27), le long de l'axe de levage (14) en direction de la pièce à usiner (10), voire dans la direction opposée et peut, de préférence, être activé afin d'effectuer de manière superposée un mouvement de déplacement le long de l'axe de positionnement inférieur (25).

4. Machine-outil selon la revendication 1, **caractérisée en ce que** le dispositif d'entraînement de levage supérieur (13) et le dispositif d'entraînement de levage inférieur (27) peuvent être activés de manière indépendante l'un de l'autre et que de préférence le dispositif d'entraînement de levage supérieur (13) et le dispositif d'entraînement de levage inférieur (27) sont de construction identique.

5. Machine-outil selon l'une quelconque des revendications précédentes, **caractérisée en ce que** dans un plan perpendiculaire à l'axe de levage (14) de l'outil supérieur (11) est prévu, d'un seul côté ou des deux côtés du bâti de machine (2), au moins un porte-pièce (28, 29) qui est contigu à l'espace intérieur de bâti (7) et sur lequel la pièce à usiner (10) en forme de plaque peut être positionnée dans un plan d'appui par rapport aux outils supérieur et inférieur (11, 9) en vue d'être usinée, et **en ce que** de préférence de manière contiguë au porte-pièce (28, 29) est prévu un dispositif d'avance (22) qui traverse l'espace intérieur de bâti (7) et le long duquel sont prévus de manière à pouvoir être déplacés des préhenseurs (23) destinés à saisir la pièce à usiner (10) en forme de plaque, grâce auxquels ladite pièce à usiner (10) en forme de plaque peut être déplacée par rapport aux outils supérieur et inférieur (11, 9) dans le plan d'appui du porte-pièce (28, 29), et **en ce que** de préférence sur le dispositif d'avance (22) est prévu un magasin (24) destiné à contenir des outils (11, 9) destinés à usiner la pièce (10).

6. Machine-outil selon l'une quelconque des revendications précédentes, **caractérisée en ce que** l'outil inférieur (9) peut être abaissé dans une position abaissée par rapport à un plan d'appui du porte-pièce (28, 29) et qu'au moins un porte-pièce (28, 29) peut passer par-dessus ledit outil et **en ce qu'**un plan d'appui fermé par le porte-pièce (28, 29) ou pouvant être fermé par celui-ci est formé dans l'espace intérieur de bâti (7).

7. Machine-outil selon l'une quelconque des revendications précédentes, **caractérisée en ce qu'**au moins un autre dispositif d'usinage de pièces (201) est affecté au bâti de machine (2) ou est disposé de manière contiguë à celui-ci et peut être déplacé en direction X, Y et/ou Z, et **en ce que** de préférence le dispositif d'usinage de pièces (201) peut être déplacé parallèlement aux outils supérieur et inférieur (11, 9), en particulier le long d'un élément de bâti horizontal supérieur (3) du bâti de machine (2) et/ou **en ce que** ledit au moins un autre dispositif d'usinage de pièces (201) est activé afin de pouvoir être déplacé de manière indépendante des outils supérieur et/ou inférieur (11, 9).

8. Machine-outil selon la revendication 7, **caractérisée en ce que** le dispositif d'usinage de pièces (201) est un dispositif d'usinage laser et comprend de préférence au moins une tête d'usinage laser (206) qui peut être déplacée le long du bâti de machine (2) et **en ce que** de préférence la tête d'usinage laser (206) peut être déplacée grâce à un entraînement linéaire (107) à au moins un axe qui est disposé sur le bâti de machine (2), et **en ce qu'**en particulier un orifice de passage de jet (210), de préférence un dispositif de capture de jet, est prévu dans le porte-pièce (28, 29), le long du trajet de déplacement de la tête de coupe laser (206) .

9. Machine-outil selon l'une quelconque des revendications 7 ou 8, **caractérisée en ce que** le mécanisme d'entraînement respectif (17, 26) de l'outil supérieur (11) et/ou de l'outil inférieur (9) ainsi que le dispositif d'usinage laser (201) peuvent être activés par la même commande (15).

10. Procédé destiné à usiner des pièces (10) en forme de plaque, en particulier des tôles, grâce à une machine-outil (1),
- lors duquel un outil supérieur (11) qui peut être déplacé, grâce à un dispositif d'entraînement de levage (13), le long d'un axe de levage (14) en direction d'une pièce (10) qui doit être usinée avec l'outil supérieur (11), voire en direction opposée, est positionné, grâce à au moins un mécanisme d'entraînement à moteur (17), le long d'un axe de positionnement supérieur (16) s'étendant perpendiculairement à l'axe de levage (14),
- lors duquel un outil inférieur (9) orienté par rapport à l'outil supérieur (11) est positionné, grâce à au moins un mécanisme d'entraînement à moteur (26), le long d'un axe de positionnement inférieur (25) qui est orienté perpendiculairement à l'axe de levage (14) de l'outil supérieur (11),
- lors duquel les outils supérieur et inférieur (11, 9) sont déplacés dans l'espace intérieur (7) d'un bâti de machine (2), et
- lors duquel les mécanismes d'entraînement à moteur (17, 26) destinés à déplacer les outils supérieur et inférieur (11, 9) sont activés par une commande (15),
- lors duquel la pièce à usiner (10) est positionnée entre l'outil supérieur (11) et l'outil inférieur (9), et
- lors duquel le mouvement de déplacement de l'outil supérieur (11) le long de l'axe de positionnement supérieur (16) et le mouvement de déplacement de l'outil inférieur (9) le long de l'axe de positionnement inférieur (25) sont respectivement activés indépendamment l'un de l'autre,
l'outil supérieur (11) étant activé afin d'effectuer de manière superposée un mouvement de déplacement le long de l'axe de positionnement supérieur (16) et un mouvement de course le long de l'axe de levage (14) du mécanisme d'entraînement de levage supérieur (13) .

11. Procédé selon la revendication 10, **caractérisé en ce que** l'outil supérieur (11) et/ou l'outil inférieur (9) est/sont activé(s) afin d'effectuer de manière superposée un mouvement de déplacement le long de l'axe de positionnement (16, 25) et un mouvement de course le long de l'axe de levage (14, 30), ou **en ce que** l'outil supérieur (11) est activé afin d'effectuer de manière superposée un mouvement de déplacement le long de l'axe de positionnement supérieur (16) et un mouvement de course le long de l'axe de levage (14) et que l'outil inférieur (9) est activé de manière à rester à l'arrêt de telle sorte que l'outil supérieur (11) et l'outil inférieur (9) sont, après une course de travail, disposés l'un par rapport à l'autre dans des positions finales accordées entre elles.

12. Procédé selon la revendication 10 ou 11, **caractérisé en ce que** l'outil supérieur (11) et/ou l'outil inférieur (9) est/sont activé(s) de manière à effectuer un mouvement de course linéaire dont la direction se situe au moins en partie en dehors de l'axe de levage (14, 30) ou **en ce que** l'outil supérieur (11) et/ou l'outil inférieur (9) est/sont activé(s) de manière à effectuer un mouvement de course selon une forme courbe ou selon une trajectoire autre dont la direction se situe au moins en partie en dehors de l'axe de levage (14, 30) .

13. Procédé selon l'une quelconque des revendications 10 à 12, **caractérisé en ce que** l'outil supérieur (11) présente un corps d'outil (39) dont l'axe longitudinal (40) est orienté parallèlement à l'axe de positionnement (35) ou se situe dans ledit axe de positionnement (35), et présente au moins une arête de coupe (38) qui est orientée de préférence à angle droit par rapport à l'axe de positionnement (35), et **en ce que** ledit outil supérieur (11) est, dans une première phase de course d'une course de travail, amené à la pièce à usiner (10) le long de l'axe de levage (14) en vue de fabriquer une arête de pièce (91) inclinée ou incurvée et est, dans une deuxième phase de course, activé de manière à effectuer un mouvement de course linéaire ou un mouvement de course courbe qui se situe au moins en partie en dehors de l'axe de levage (14) et que l'arête de pièce (91) est usinée par enlèvement.

14. Procédé selon l'une quelconque des revendications 10 à 12, **caractérisé en ce que** l'outil supérieur (11) présente un corps d'outil (39) dont l'axe longitudinal (40) est orienté de manière à être incliné par rapport à l'axe de position (35) et au moins une arête de coupe (38) qui est orientée de préférence à angle droit par rapport à l'axe de positionnement (35) ou par rapport à l'axe longitudinal (40), et **en ce que** ledit outil supérieur (11) est, dans une première phase de course d'une course de travail, amené à la pièce à usiner (10) le long de l'axe de levage (14) en vue de fabriquer une arête de pièce (91) inclinée ou incurvée et est, dans une deuxième phase de course, activé de manière à effectuer un mouvement de course linéaire ou un mouvement de course courbe qui se situe au moins en partie en dehors de l'axe de levage (14) et que l'arête de pièce (91) est usinée par enlèvement.

15. Procédé selon la revendication 13 ou 14, **caractérisé en ce que** l'outil supérieur (11) est activé de manière que soit réalisée une troisième phase de course succédant à la deuxième phase de course lors de laquelle est activé un mouvement de course le long de l'axe de levage (14) afin de séparer, par une dernière coupe, un matériau de la pièce à usiner (10) en vue du finissage de l'arête de pièce (91).

16. Procédé selon l'une quelconque des revendications 10 à 15, **caractérisé en ce que** l'outil supérieur (11) et/ou l'outil inférieur (9) sont orientés l'un par rapport à l'autre, grâce au dispositif d'entraînement de levage (13, 27), par une rotation autour de l'axe de position (35, 48).
